# EUROPÄISCHE PATENTSCHRIFT

(11) **EP 3 208 525 B1**
(45) Veröffentlichungstag und Bekanntmachung des Hinweises auf die Patenterteilung: **02.05.2018**
(21) Anmeldenummer: 17153678.2
(22) Anmeldetag: 30.01.2017
(51) Int. Cl.: F21S 8/10, F21V 8/00

(54) **LICHTLEITER FÜR EINEN FAHRZEUGSCHEINWERFER**
LIGHT GUIDE FOR A VEHICLE HEADLIGHT
GUIDE DE LUMIÈRE POUR UN PHARE DE VÉHICULE AUTOMOBILE

(30) Priorität: 17.02.2016 AT 501032016
(43) Veröffentlichungstag der Anmeldung: 23.08.2017
(73) Patentinhaber: ZKW Group GmbH, 3250 Wieselburg (AT)
(72) Erfinder: Fabry, Marek, 91108 Trencin (SK); Faffelberger, Anton, 3375 Krummnußbaum (AT)
(74) Vertreter: Patentanwaltskanzlei Matschnig & Forsthuber OG

(56) Entgegenhaltungen:
- EP-A1- 2 607 777
- EP-A1- 2 620 790
- EP-A2- 2 660 508
- DE-A1-102012 108 855
- DE-A1-102014 113 318
- US-A1- 2012 069 592

## Beschreibung

Die Erfindung betrifft einen Lichtleiter für einen Fahrzeugscheinwerfer, wobei der Lichtleiter eine entlang eines Lichthauptwegs langgestreckte Formgebung aufweist und an einem Ende eine Lichteinkoppelfläche zum Einkoppeln von Licht in den Lichtleiter aufweist, und der Lichtleiter einen Abstrahlbereich mit einem Abstrahlbereichsanfang und einem Abstrahlbereichsende umfasst, wobei der Abstrahlbereich längs des Lichtleiters mehrere Lichtstreuungselemente umfasst, durch die Licht im Wesentlichen quer zum Lichthauptweg reflektierbar ist, um aus dem Lichtleiter abgestrahlt zu werden. Ein derartiger Lichtleiter ist aus EP 2 607 777 A1 bekannt. Des Weiteren betrifft die Erfindung eine Lichtleitereinrichtung für einen Fahrzeugscheinwerfer, die zumindest zwei erfindungsgemäße Lichtleiter umfasst. Langgestreckte Leitleiter finden im Kraftfahrzeugscheinwerferbau häufig Verwendung, beispielsweise zur Erzeugung von Standlichtverteilungen oder Tagfahrlichtverteilungen, oder zur Erzeugung von Signalisierungsfunktionen, z.B. einer Blinklichtfunktion. Unter dem Begriff "langgestreckt" oder "länglich" ist dabei zu verstehen, dass die Längserstreckung des Lichtleiters (also die Erstreckung in Lichtausbreitungsrichtung in dem Lichtleiter bzw. der "Lichthauptweg") deutlich größer ist, z.B. mindestens 10 mal größer, als die Quererstreckung (also z.B. der oder ein Durchmesser des Lichtleiters). Bei der vorliegenden Erfindung weist der verwendete Lichtleiter in der Regel zwei offene Enden auf. An einem Ende wird das Licht einer Lichtquelle eingekoppelt, während an dem anderen offenen Ende keine Lichteinkopplung stattfindet.

Solche länglichen Lichtleiter weisen in typischen Beleuchtungseinheiten für Kraftfahrzeugscheinwerfer von einer Lichteinkoppelfläche ausgehend einen Einkoppelbereich und einen daran anschließenden Auskoppelbereich, der für die gewünschte Auskopplung von Licht aus dem Lichtleiter sorgt, auf.

Lichtleiter nach dem Stand der Technik weisen im Einkoppelbereich eine inhomogene Lichtverteilung innerhalb des Lichtleiters auf. Deshalb werden in der Regel Blenden vorgesehen, mittels welchen der Einkoppelbereich abgedeckt wird, um anderenfalls auftretende Abstrahlungen zu verhindern, die das äußere Erscheinungsbild des Scheinwerfers nachteilig stören würden. Durch die Blenden wird allerdings die effektive Länge des Lichtleiters verringert, der Lichtleiter wird daher optisch verkürzt und entsprechend kann der in einem Kraftfahrzeug in der Regel ohnehin knapp bemessene Bauraum nicht optimal ausgenutzt werden.

Des Weiteren resultiert daraus, dass der Lichtleiter eine geringere effektive Lichtaustrittsfläche aufweist und damit bei gleicher Leistung der Lichtquelle weniger Licht emittiert als ein identischer Lichtleiter, der nicht von einer Blende abgedeckt wird.

Außerdem ist es nachteilig, dass eine solche Blende Bauraum benötigt, der in modernen Kraftfahrzeugen ohnehin stark eingeschränkt ist und die Blende zusätzlich Material- und Montagekosten erhöht.

Es ist eine Aufgabe der Erfindung, die obigen Nachteile zu umgehen und kostengünstig eine homogene Lichtverteilung nahe des Einkoppelbereichs zu erzielen.

Die Aufgabe der Erfindung wird in einem ersten Aspekt dadurch gelöst, dass der Lichtleiter einen Diffusorbereich mit einem Diffusorbereichsanfang und einem Diffusorbereichsende umfasst, welcher auf der Oberfläche des Lichtleiters als zumindest eine im Wesentlichen längs des Lichtleiters verlaufende Erhebung ausgebildet ist, wobei der Diffusorbereichsanfang dem Lichthauptweg stromab der Lichteinkoppelfläche und das Diffusorbereichsende stromab des Diffusorbereichsanfangs angeordnet ist, und der Abstrahlbereichsanfang stromab des Diffusorbereichsanfangs und das Abstrahlbereichsende stromab des Abstrahlbereichsanfangs angeordnet ist.

Es ist besonders günstig, wenn die Lichteinkoppelfläche senkrecht zum Lichthauptweg angeordnet ist, um eine optimale Lichteinkopplung in den Lichtleiter durch eine Lichtquelle zu bewirken, das heißt das Licht möglichst reflexionsfrei und einfach in den Lichtleiter eingekoppelt werden kann.

Durch den erfindungsgemäßen Diffursorbereich des Lichtleiters wird erreicht, dass das durch die Lichteinkoppelfläche in den Lichtleiter eingekoppelte Licht homogen im Lichtleiter verteilt wird, bevor es anschließend im Abstrahlbereich aus dem Lichtleiter abgestrahlt wird.

Vorteilhaft ist es, wenn die zumindest eine Erhebung entlang des Lichtleiters eine Höhe aufweist, die sich vom Diffusorbereichsanfang zum Diffusorbereichsende hin verringert. Vorzugsweise kann die Höhe am Diffusorbereichsende auf Null abnehmen. Diese Ausgestaltung führt zu einer besonders homogenen Lichtverteilung innerhalb des Lichtleiters, da kein abruptes Ende des Diffusorbereichs ausgebildet ist und ein sanfter Übergang für eine verbesserte Lichtverteilung sorgt.

Ferner ist es günstig, wenn der Diffusorbereich eine Länge aufweist, die zumindest dem doppelten Durchmesser des Lichtleiters entspricht. Es ist auch günstig, wenn die Höhe im Diffusorbereichsanfang zumindest 5% des Durchmessers des Lichtleiters beträgt. Zusätzlich ist es günstig, wenn der Diffusorbereichsanfang in der Lichteinkoppelfläche liegt.

Eine besonders vorteilhafte Weiterbildung ist gegeben, wenn mehrere Erhebungen parallel zueinander verlaufen. Dadurch kann die Homogenisierung der Lichtverteilung innerhalb des Lichtleiters weiter gesteigert werden. Wenn mehrere Erhebungen parallel zueinander verlaufen und stetige Übergänge zwischen den einzelnen Erhebungen ausgeführt sind, verbessert sich die Homogenität im Lichtleiter weiter.

Um die nutzbare Länge des Lichtleiters möglichst effektiv auszunutzen, ist es vorteilhaft, wenn sich der Diffusorbereich und der Abstrahlbereich überlappen. Wenn der Abstrahlbereichsanfang stromab des Diffusorbereichsendes angeordnet ist, ist die Homogenisierung allerdings besonders günstig.

Günstig ist es überdies, die zumindest eine Erhebung im Diffusorbereich zu den Lichtstreuungselementen des Abstrahlbereichs auf dem Umfangs des Lichtleiters im Wesentlichen gegenüber liegt. Dadurch kann eine Lichtquelle, deren Licht über die Lichteinkoppelfläche in den Lichtleiter eingekoppelt wird, beispielsweise in einem Fahrzeugscheinwerfer sehr gut positioniert werden, um die gewünschte Position des Abstrahlbereichs zu erreichen.

Eine günstige Ausführungsform zeichnet sich durch Lichtstreuungselemente aus, die durch Vertiefungen in der Oberfläche des Lichtleiters gebildet sind, wobei zumindest ein Lichtstreuungselement im Wesentlichen in Umfangsrichtung des Lichtleiters, vorzugsweise nur auf einem Teil des Umfangs, verläuft. Mehrere, im Wesentlichen gleichartige Lichtstreuungselemente können parallel zueinander, aber längs des Lichtleiters angeordnet sein. Durch diese Ausführung der Lichtstreuungselemente ist eine besonders einfache und kostengünstige Herstellung gewährleistet.

Wenn der Lichtleiter im Diffusorbereich gekrümmt verläuft, kann die Länge des Lichtleiters sehr effektiv ausgenutzt werden, da eine Lichtquelle beispielsweise in einem Fahrzeugscheinwerfer sehr variabel positioniert werden kann, und das Licht der Lichtquelle über die Lichteinkoppelfläche in den Lichtleiter auf sehr kleinem Bauraum eingekoppelt werden kann, ohne dass es nötig ist, Bereiche des Lichtleiters, die eine ungünstige Lichtemission aufweisen, beispielsweise durch Blenden abzudecken.

Die Aufgabe der Erfindung wird in einem weiteren Aspekt gelöst, in welchem eine Lichtleitereinrichtung zumindest zwei der vorher genannten Lichtleiter umfasst, die benachbart derart angeordnet sind, dass die Lichteinkoppelflächen sämtlicher Lichtleiter eine gemeinsame Fläche bilden.

Wenn zumindest zwei Lichtleiter benachbart derart angeordnet sind, dass die Lichteinkoppelflächen sämtlicher Lichtleiter eine gemeinsame Fläche bilden und sich die Lichtleiter hinsichtlich ihrer gedachten Querschnitte in deren Diffusorbereichen überlappen, so ist eine gemeinsame Lichteinspeisung aller Lichtleiter aus einer gemeinsamen oder vereinfachten Lichtquelle möglich. Zusätzlich formen die Lichtleiter in der Lichtleitereinrichtung ein gemeinsames Bauteil. Durch diese Aspekte ergeben sich Kostenvorteile und ein geringerer benötigter Bauraum. Ferner werden durch die vereinfachte Montage einer einzigen Lichtleitereinrichtung Montagezeiten und Montagekosten reduziert.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in:
- Fig. 1: eine perspektivische Darstellung eines erfindungsgemäßen Lichtleiters,
- Fig. 2: eine vergrößerte perspektivische Darstellung des Lichtleiters gemäß Detail I der Fig. 1,
- Fig. 3: eine Aufsicht auf den Lichtleiter der Fig. 1,
- Fig. 4: den Querschnitt gemäß der Schnittebene A-A der Fig. 3,
- Fig. 5: den Querschnitt gemäß der Schnittebene B-B der Fig. 3,
- Fig. 6: den Querschnitt gemäß der Schnittebene C-D der Fig. 3,
- Fig. 7: eine Vorderansicht des Lichtleiters der Fig. 1,
- Fig. 8: eine vergrößerte Darstellung der Lichteinkoppelfläche des Lichtleiters der Fig. 7,
- Fig. 9: eine Vorderansicht einer abgestrahlten Lichtverteilung eines Lichtleiters nach dem Stand der Technik,
- Fig. 10: eine Vorderansicht einer abgestrahlten Lichtverteilung eines erfindungsgemäßen Lichtleiters,
- Fig. 11: eine Aufsicht einer erfindungsgemäßen Lichtleitereinrichtung, die zumindest zwei erfindungsgemäße Lichtleiter umfasst,
- Fig. 12: eine perspektivische Darstellung der Lichtleitereinrichtung,
- Fig. 13: einen vergrößerten Ausschnitt in perspektivischer Ansicht gemäß Detail II der Fig. 12,
- Fig. 14: eine perspektivische Darstellung einer weiteren Lichtleitereinrichtung,
- Fig. 15: einen vergrößerten Ausschnitt in perspektivischer Ansicht gemäß Detail III der Fig. 14.

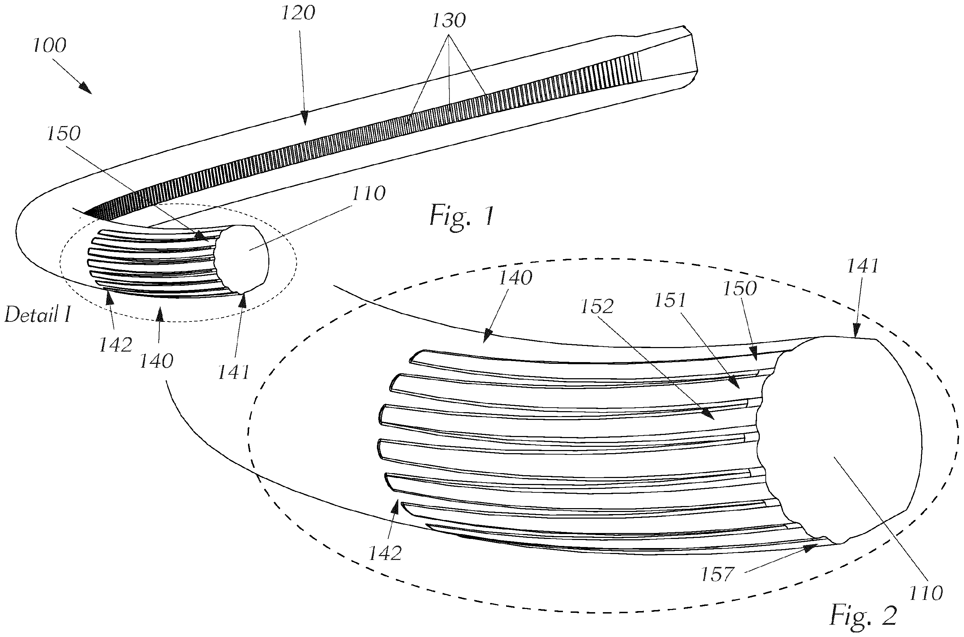

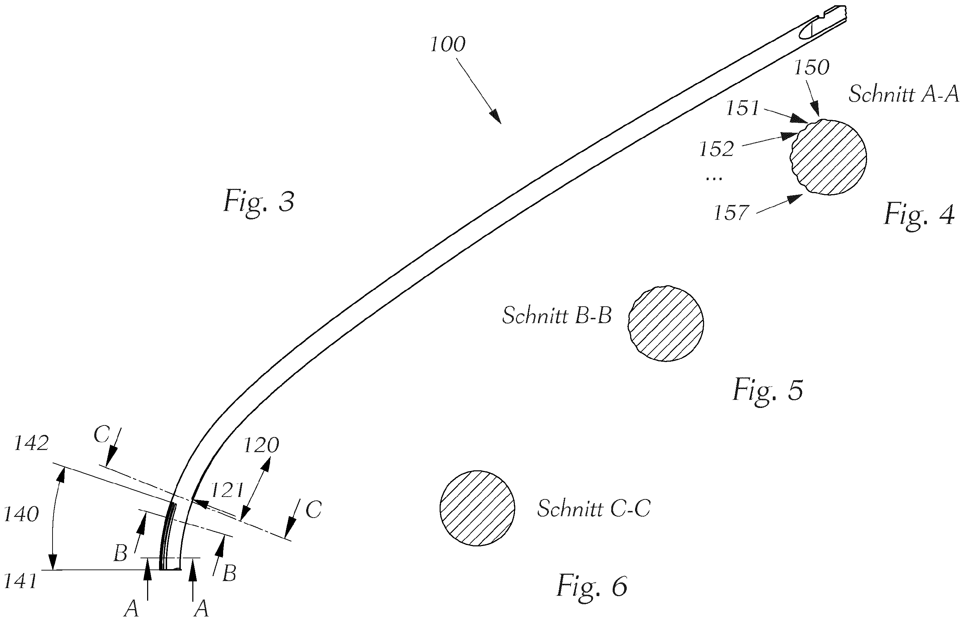

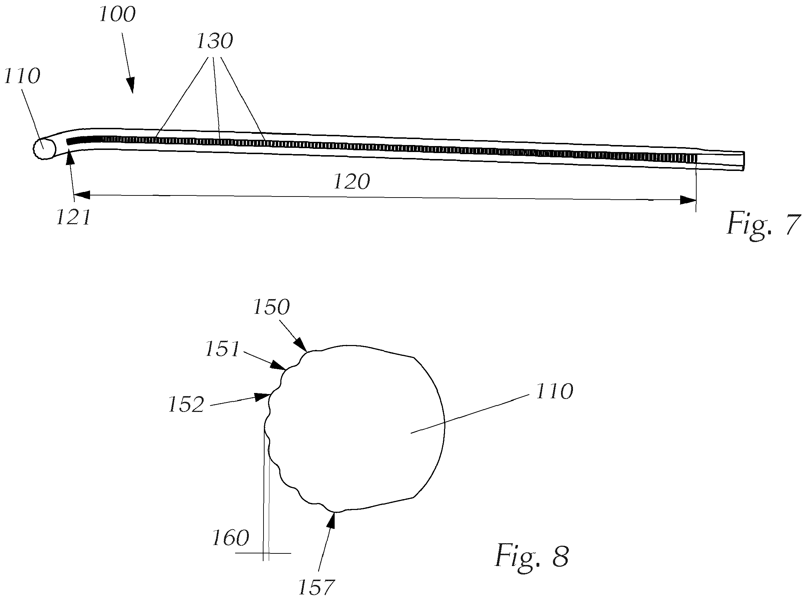

In **Fig. 1** bis **Fig. 8** ist ein Lichtleiter 100 eines ersten Ausführungsbeispiels der Erfindung gezeigt, der einen gekrümmten Verlauf aufweist. Der Lichtleiter 100 weist eine entlang eines Lichthauptwegs langgestreckte Formgebung und an einem Ende eine Lichteinkoppelfläche 110 zum Einkoppeln von Licht in den Lichtleiter 100 auf.

Ferner weist der Lichtleiter 100 einen Abstrahlbereich 120 mit einem Abstrahlbereichsanfang 121 und einem Abstrahlbereichsende auf, wobei der Abstrahlbereich 120 längs des Lichtleiters 100 mehrere Lichtstreuungselemente 130 umfasst, durch die Licht im Wesentlichen quer zum Lichthauptweg reflektierbar ist, um aus dem Lichtleiter 100 abgestrahlt zu werden.

Der Lichtleiter 100 weist einen Diffusorbereich 140 mit einem Diffusorbereichsanfang 141 und einem Diffusorbereichsende 142 auf. Der Diffusorbereich 140 ist auf der Oberfläche des Lichtleiters 100 in Form mehrerer, im Wesentlichen längs des Lichtleiters 100 verlaufenden Erhebungen 150-157 ausgebildet.

Der Diffusorbereichsanfang 141 ist dem Lichthauptweg stromab der Lichteinkoppelfläche 110 und das Diffusorbereichsende 142 stromab des Diffusorbereichsanfangs 141 angeordnet. Der Abstrahlbereichsanfang 121 ist stromab des Diffusorbereichsanfangs 141 und das Abstrahlbereichsende stromab des Abstrahlbereichsanfangs 121 angeordnet.

Die Erhebungen 150-157 weisen entlang des Lichtleiters 100 eine Höhe 160 auf, die sich vom Diffusorbereichsanfang 141 zum Diffusorbereichsende 142 hin verringert.

In diesem Ausführungsbeispiel weist der Diffusorbereich 140 eine Länge von etwa dem vierfachen Durchmesser des Lichtleiters 100 auf und der Diffusorbereichsanfang 141 liegt in der Lichteinkoppelfläche 110. Die Lichteinkoppelfläche 110 liegt senkrecht zum Lichthauptweg, um eine optimale Einkopplung von Licht zu erzielen. Ferner entspricht die Höhe 160 im Diffusorbereichsanfang 141 etwa 10% des Durchmessers von Lichtleiter 100.

Die Erhebungen 150-157 verlaufen parallel zueinander und weisen stetige Übergänge zwischen den einzelnen Erhebungen auf, wodurch eine weitere Homogenisierung der Lichtverteilung innerhalb des Lichtleiters 100 bewirkt wird.

Der Abstrahlbereichsanfang 121 ist stromab des Diffusorbereichsendes 142 angeordnet, wodurch die gewünschte Homogenisierung verstärkt ist.

Es ist vorteilhaft, wenn der Verlauf des Lichtleiters 100 in der Entwurfsphase der Scheinwerferkonstruktion frei gewählt werden kann, um Freiräume in der Gestaltung eines Scheinwerfers zu erhalten, sowie die Kompaktheit eines Scheinwerfers weiter erhöhen zu können. Um diesen Anforderungen gerecht zu werden, erfordert der Verlauf des Lichtleiters 100 in der Regel eine gekrümmte Form. In der Krümmung am Anfang des Lichtleiters 100 wird eine besonders homogene Lichtverteilung erzielt, indem die Parameter des Diffusorbereichs 140, insbesondere Länge sowie Geometrie der Erhebungen 150-157 geeignet gewählt werden. Günstig ist es, wenn die Erhebungen 150 -157 im Diffusorbereich 140 auf dem Umfang des Lichtleiters 100 zu den Lichtstreuungselementen 130 im Abstrahlbereich 120 im Wesentlichen gegenüber liegen.

Die Lichtstreuungselemente 130 sind durch Vertiefungen in der Oberfläche des Lichtleiters 100 gebildet. Ein Lichtstreuungselement 130 verläuft im Wesentlichen in Umfangsrichtung des Lichtleiters 100, jedoch nur auf einem Teil des Umfangs, vorzugsweise auf weniger als der Hälfte des Umfangs, noch bevorzugter auf weniger als einem Viertel des Umfangs. Mehrere, im Wesentlichen gleichartige Lichtstreuungselemente 130 sind parallel zueinander, aber längs des Lichtleiters 100 angeordnet.

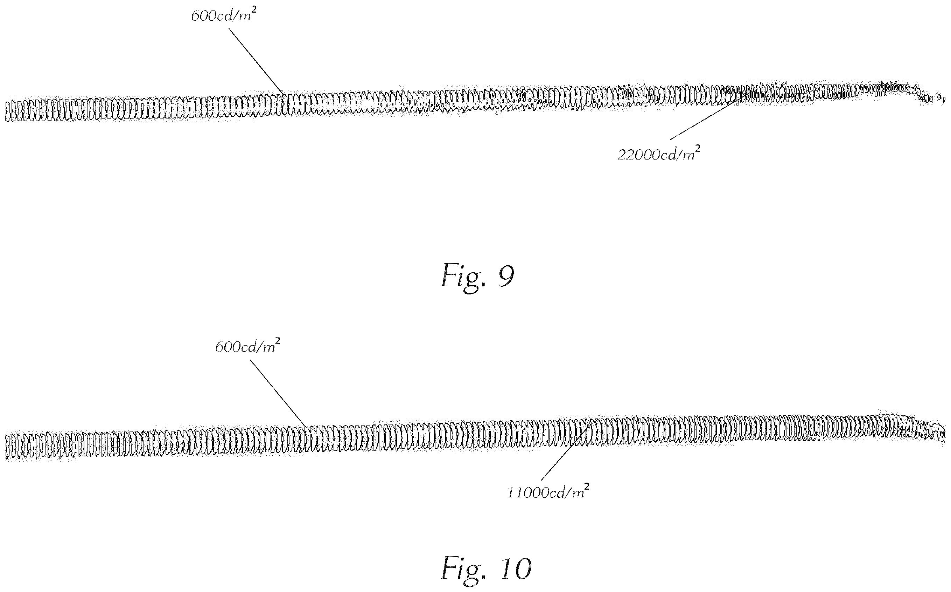

**Fig. 9** zeigt eine Vorderansicht einer Lichtverteilung eines Lichtleiters nach dem Stand der Technik, die durch die Lichtabstrahlung des Lichtleiters erzeugt ist. Dabei liegt der Einkoppelbereich, durch den Licht eingekoppelt ist, im rechten Bildbereich. Dort ist ein inhomogener Helligkeitsverlauf in der Lichtverteilung erkennbar.

**Fig. 10** zeigt eine Vorderansicht einer Lichtverteilung eines erfindungsgemäßen Lichtleiters, die durch Lichtabstrahlung des Lichtleiters erzeugt ist. Der Lichtleiter weist zu Vergleichszwecken die gleiche Geometrie des Lichtleiters wie in Fig. 9 auf und umfasst zusätzlich den erfindungsgemäßen Diffusorbereich. Es ist eine deutliche Verbesserung der Homogenität der Lichtverteilung über die gesamte Länge des Lichtleiters erkennbar.

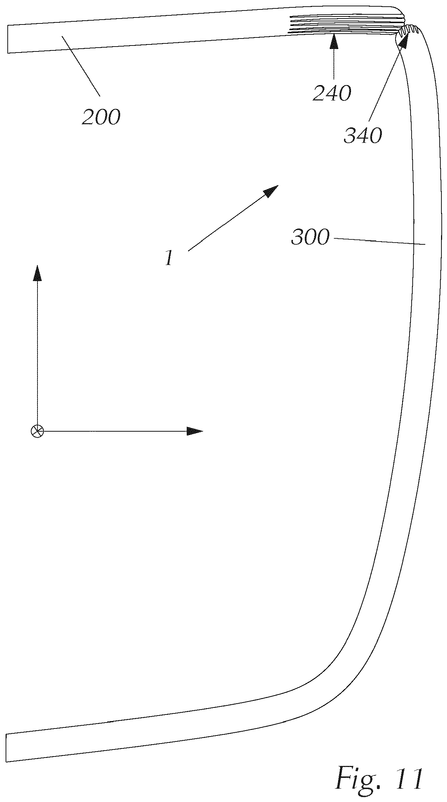

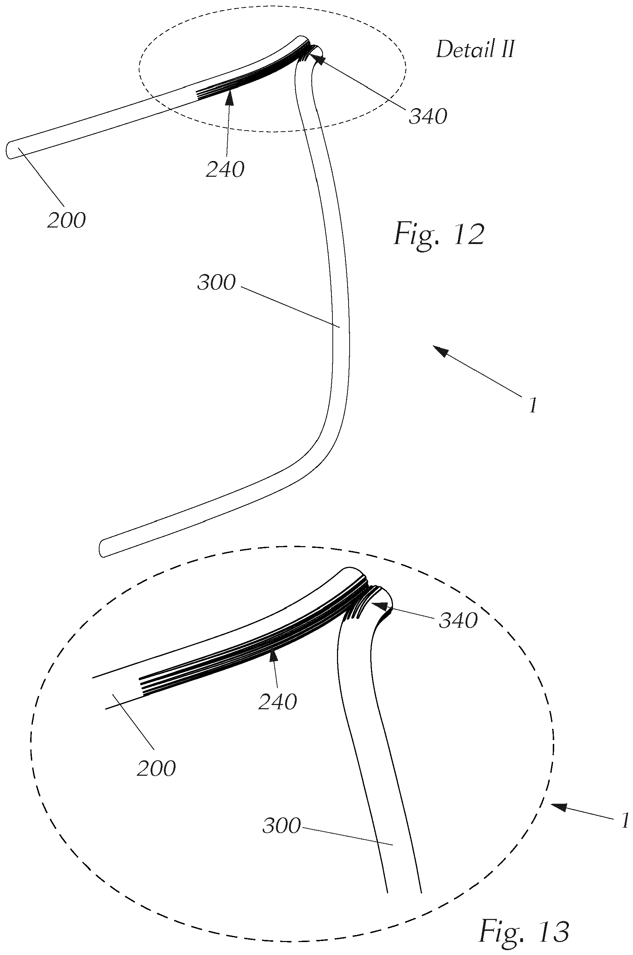

In **Fig. 11** bis **Fig. 13** ist ein Ausführungsbeispiel einer Lichtleitereinrichtung 1 für einen Fahrzeugscheinwerfer dargestellt, welches zwei erfindungsgemäße Lichtleiter 200, 300 enthält, die eine dem Lichtleiter 100 entsprechende Formgebung haben. Die Lichtleiter 200, 300 sind benachbart derart angeordnet, dass ihre Lichteinkoppelflächen eine gemeinsame Fläche bilden und sich die Lichtleiter 200, 300 hinsichtlich ihrer gedachten Querschnitte in den Diffusorbereichen 240, 340 überlappen. Dadurch ist es möglich, zwei Lichtleiter als ein gemeinsames Bauteil zu auszuführen und zu fertigen, wodurch die Herstell- und Montagekosten reduziert werden können. Zusätzlich ist es dadurch möglich, durch eine gemeinsame Lichteinkopplung, beispielsweise durch eine gemeinsame Lichtquelle, vorzugsweise eine LED, Power-LED oder einen Halbleiterlaser, Kostenvorteile zu erzielen. Alternativ ist es möglich, dass jeder Lichtleiter über eine eigene Lichtquelle verfügt, beispielsweise zum Zweck einer getrennten elektronischen Ansteuerung. Vorteilhaft ist es dabei, wenn die separaten Lichtquellen auf einem gemeinsamen Schaltungsträger, einer Leiterplatte oder einem Modul, angeordnet sind, um eine kleine Bauform und eine geringe Anzahl an Komponenten, beispielsweise in der Stromversorgung der Lichtquelle oder weiterer, gemeinsam genutzter elektronischen Komponenten oder einfacherer Verbindungsleitungen, zu erreichen.

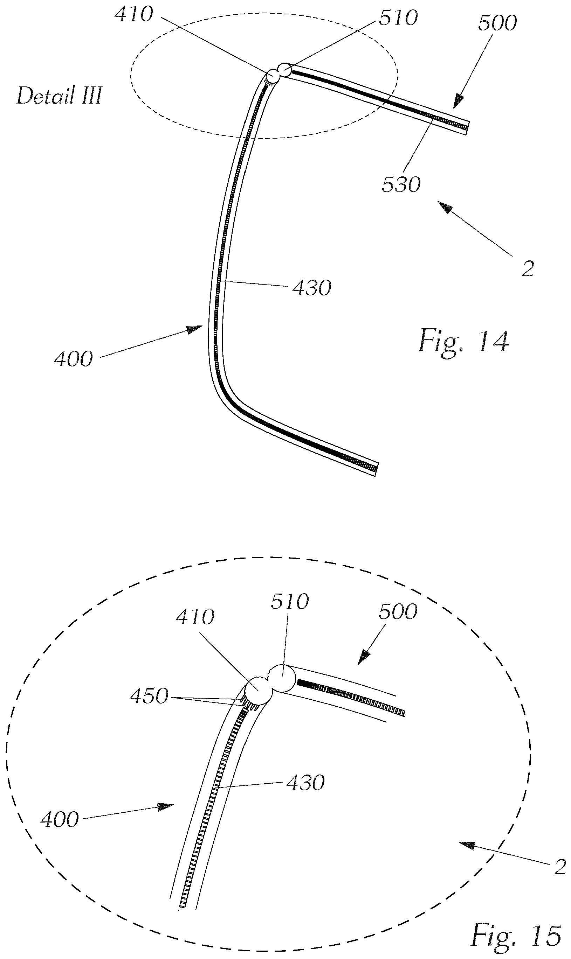

In **Fig. 14** und **Fig. 15** ist ein weiteres Ausführungsbeispiel einer Lichtleitereinrichtung 2 für einen Fahrzeugscheinwerfer dargestellt, wobei zwei erfindungsgemäße Lichtleiter 400, 500, die eine dem Lichtleiter 100 entsprechende Formgebung haben, mit Lichtstreuungselementen 430, 530 sowie Erhebungen 450 gezeigt sind. Die Lichtleiter 400, 500 sind benachbart derart angeordnet, dass die Lichteinkoppelflächen 410, 510 der Lichtleiter 400, 500 eine gemeinsame Fläche bilden und sich die Lichtleiter 400, 500 hinsichtlich ihrer gedachten Querschnitte in den Diffusorbereichen überlappen. Im Übrigen gilt das in Fig. 11 bis Fig. 13 Gesagte.

### Liste der Bezugszeichen:

- 1, 2: Lichtleitereinrichtung
- 100, 200, 300, 400, 500: Lichtleiter
- 110, 210, 310, 410, 510: Lichteinkoppelfläche
- 120, 220, 320: Abstrahlbereich
- 121: Abstrahlbereichsanfang
- 130, 230, 330, 430, 530: Lichtstreuungselemente
- 140, 240, 340: Diffusorbereich
- 141: Diffusorbereichsanfang
- 142: Diffusorbereichsende
- 150-157,450: Erhebung
- 160: Höhe einer Erhebung

## Patentansprüche

1. Lichtleiter (100) für einen Fahrzeugscheinwerfer, wobei der Lichtleiter (100) eine entlang eines Lichthauptwegs langgestreckte Formgebung aufweist und an einem Ende eine Lichteinkoppelfläche (110) zum Einkoppeln von Licht in den Lichtleiter (100) aufweist, und der Lichtleiter (100) einen Abstrahlbereich (120) mit einem Abstrahlbereichsanfang (121) und einem Abstrahlbereichsende umfasst, wobei der Abstrahlbereich (120) längs des Lichtleiters (100) mehrere Lichtstreuungselemente (130) umfasst, durch die Licht im Wesentlichen quer zum Lichthauptweg reflektierbar ist, um aus dem Lichtleiter (100) abgestrahlt zu werden,
**dadurch gekennzeichnet, dass**
der Lichtleiter (100) einen Diffusorbereich (140) mit einem Diffusorbereichsanfang (141) und einem Diffusorbereichsende (142) umfasst, welcher auf der Oberfläche des Lichtleiters (100) als zumindest eine im Wesentlichen längs des Lichtleiters (100) verlaufende Erhebung (150) ausgebildet ist,
wobei der Diffusorbereichsanfang (141) dem Lichthauptweg stromab der Lichteinkoppelfläche (110) und das Diffusorbereichsende (142) stromab des Diffusorbereichsanfangs (141) angeordnet ist, und der Abstrahlbereichsanfang (121) stromab des Diffusorbereichsanfangs (141) und das Abstrahlbereichsende stromab des Abstrahlbereichsanfangs (121) angeordnet ist.

2. Lichtleiter (100) nach Anspruch 1, **dadurch gekennzeichnet, dass** die zumindest eine Erhebung (150) entlang des Lichtleiters (100) eine Höhe (160) aufweist, die sich vom Diffusorbereichsanfang (141) zum Diffusorbereichsende (142) hin verringert und vorzugsweise am Diffusorbereichsende (142) auf Null abnimmt.

3. Lichtleiter (100) nach Anspruch 1 oder 2, **dadurch gekennzeichnet, dass** mehrere Erhebungen (150-157) parallel zueinander verlaufen.

4. Lichtleiter (100) nach einem der Ansprüche 1 bis 3, **dadurch gekennzeichnet, dass** mehrere Erhebungen (150-157) parallel zueinander verlaufen und stetige Übergänge zwischen den einzelnen Erhebungen aufweisen.

5. Lichtleiter (100) nach einem der Ansprüche 1 bis 4, **dadurch gekennzeichnet, dass** der Abstrahlbereichsanfang (121) stromab des Diffusorbereichsendes (142) angeordnet ist.

6. Lichtleiter (100) nach einem der Ansprüche 1 bis 5, **dadurch gekennzeichnet, dass** die zumindest eine Erhebung (150) im Diffusorbereich (140) auf dem Umfang des Lichtleiters (100) zu den Lichtstreuungselementen (130) im Abstrahlbereich (120) im Wesentlichen gegenüber liegt.

7. Lichtleiter (100) nach einem der Ansprüche 1 bis 6, **dadurch gekennzeichnet, dass** die Lichtstreuungselemente (130) durch Vertiefungen in der Oberfläche des Lichtleiters (100) gebildet sind, wobei zumindest ein Lichtstreuungselement (130) im Wesentlichen in Umfangsrichtung des Lichtleiters (100), vorzugsweise nur über einen Teil des Umfangs, verläuft, und mehrere, im Wesentlichen gleichartige Lichtstreuungselemente (130) parallel zueinander, aber längs des Lichtleiters (100) angeordnet sind.

8. Lichtleiter (100) nach einem der Ansprüche 1 bis 7, **dadurch gekennzeichnet, dass** der Lichtleiter (100) im Diffusorbereich (140) gekrümmt verläuft.

9. Lichtleitereinrichtung (1, 2) für einen Fahrzeugscheinwerfer, **gekennzeichnet durch** zumindest zwei Lichtleiter (200,300,400,500) nach einem der Ansprüche 1 bis 8, die benachbart derart angeordnet sind, dass die Lichteinkoppelflächen (210, 310, 410, 510) sämtlicher Lichtleiter (200, 300, 400, 500) eine gemeinsame Fläche bilden.

10. Lichtleitereinrichtung (1, 2) nach Anspruch 9, **dadurch gekennzeichnet, dass** zumindest zwei Lichtleiter (200, 300, 400, 500) benachbart derart angeordnet sind, dass die Lichteinkoppelflächen (210, 310, 410, 510) sämtlicher Lichtleiter (200, 300,400, 500) eine gemeinsame Fläche bilden und sich die Lichtleiter (200, 300, 400, 500) hinsichtlich ihrer gedachten Querschnitte in den Diffusorbereichen (240, 340) überlappen.

## Claims

1. A light guide (100) for a vehicle headlamp, wherein the light guide (100) has an elongate shaping along a main light path and at one end has a light incoupling surface (110) for coupling light into the light guide (100), and the light guide (100) comprises a radiation region (120) with a radiation region start (121) and a radiation region end, wherein the radiation region (120) comprises a plurality of light scattering elements (130) along the light guide (100), by means of which the light can be reflected substantially transversely to the main light path in order to be radiated from the light guide (100),
**characterised in that**
the light guide (100) comprises a diffusor region (140) with a diffusor region start (141) and a diffusor region end (142), which is formed on the surface of the light guide (100) as an elevation (150) running at least substantially along the light guide (100),
wherein, along the main light path, the diffusor region start (141) is arranged downstream of the light incoupling surface (110) and the diffusor region end (142) is arranged downstream of the diffusor region start (141), and the radiation region start (121) is arranged downstream of the diffusor region start (141) and the radiation region end is arranged downstream of the radiation region start (121).

2. The light guide (100) according to claim 1, **characterised in that** the at least one elevation (150) has a height (160) along the light guide (100) that reduces from the diffusor region start (141) to the diffusor region end (142) and preferably decreases at the diffusor region end (142) to zero.

3. The light guide (100) according to claim 1 or 2, **characterised in that** a plurality of elevations (150-157) run parallel to one another.

4. The light guide (100) according to any one of claims 1 to 3, **characterised in that** a plurality of elevations (150-157) run parallel to one another and have continuous transitions between the individual elevations.

5. The light guide (100) according to any one of claims 1 to 4, **characterised in that** the radiation region start (121) is arranged downstream of the diffusor region end (142).

6. The light guide (100) according to any one of claims 1 to 5, **characterised in that** the at least one elevation (150) in the diffusor region (140) is arranged on the periphery of the light guide (100) substantially opposite the light scattering elements (130) in the radiation region (120).

7. The light guide (100) according to any one of claims 1 to 6, **characterised in that** the light scattering elements (130) are formed by indentations in the surface of the light guide (100), wherein at least one light scattering element (130) runs substantially in the peripheral direction of the light guide (100), preferably only over part of the periphery, and a plurality of substantially identical light scattering elements (130) are arranged parallel to one another, but along the light guide (100).

8. The light guide (100) according to any one of claims 1 to 7, **characterised in that** the light guide (100) runs in a curved manner in the diffusor region (140).

9. A light guide device (1, 2) for a vehicle headlamp, **characterised by** at least two light guides (200, 300, 400, 500) according to any one of claims 1 to 8, which are arranged adjacently in such a way that the light incoupling surfaces (210, 310, 410, 510) of all light guides (200, 300, 400, 500) form a common surface.

10. The light guide device (1, 2) according to claim 9, **characterised in that** at least two light guides (200, 300, 400, 500) are arranged adjacently to one another in such a way that the light incoupling surfaces (210, 310, 410, 510) of all light guides (200, 300, 400, 500) form a common surface and the light guides (200, 300, 400, 500) overlap in respect of their notional cross-sections in the diffusor regions (240, 340).

## Revendications

1. Guide de lumière (100) pour un phare de véhicule, le guide de lumière (100) présentant une conformation allongée le long d'un trajet de lumière principal et présentant à une extrémité une surface de couplage de lumière (110) pour le couplage de la lumière dans le guide de lumière (100), et le guide de lumière (100) comportant une zone d'émission (120) ayant un début de zone d'émission (121) et une fin de zone d'émission, la zone d'émission (120) comportant le long du guide de lumière (100) plusieurs éléments de diffusion de lumière (130) par lesquels de la lumière peut être réfléchie sensiblement transversalement au trajet de lumière principal, afin d'être émise hors du guide de lumière (100),
**caractérisé par le fait que**
le guide de lumière (100) comporte une zone de diffuseur (140) ayant un début de zone de diffuseur (141) et une fin de zone de diffuseur (142), laquelle zone de diffuseur est réalisée sur la surface du guide de lumière (100) en tant qu'au moins une élévation (150) s'étendant sensiblement le long du guide de lumière (100),
dans lequel le début de zone de diffuseur (141) est disposé sur le trajet de lumière principal en aval de la surface de couplage de lumière (110) et la fin de zone de diffuseur (142) est disposée en aval du début de zone de diffuseur (141), et le début de zone d'émission (121) est disposé en aval du début de zone de diffuseur (141) et la fin de zone d'émission est disposée en aval du début de zone d'émission (121).

2. Guide de lumière (100) selon la revendication 1, **caractérisé par le fait que** la au moins une élévation (150) présente le long du guide de lumière (100) une hauteur (160) qui se réduit du début de zone de diffuseur (141) en direction de la fin de zone de diffuseur (142) et de préférence diminue jusqu'à la valeur zéro à la fin de zone de diffuseur (142).

3. Guide de lumière (100) selon l'une des revendications 1 ou 2, **caractérisé par le fait que** plusieurs élévations (150-157) s'étendent parallèlement entre elles.

4. Guide de lumière (100) selon l'une des revendications 1 à 3, **caractérisé par le fait que** plusieurs élévations (150-157) s'étendent parallèlement entre elles et présentent des transitions continues entre les élévations individuelles.

5. Guide de lumière (100) selon l'une des revendications 1 à 4, **caractérisé par le fait que** le début de zone d'émission (121) est disposé en aval de la fin de zone de diffuseur (142).

6. Guide de lumière (100) selon l'une des revendications 1 à 5, **caractérisé par le fait que** la au moins une élévation (150) dans la zone de diffuseur (140) à la périphérie du guide de lumière (100) se situe par rapport aux éléments de diffusion de lumière (130) dans la zone d'émission (120) sensiblement à l'opposé.

7. Guide de lumière (100) selon l'une des revendications 1 à 6, **caractérisé par le fait que** les éléments de diffusion de lumière (130) sont formés par des cavités dans la surface du guide de lumière (100), au moins un élément de diffusion de lumière (130) s'étendant sensiblement dans la direction périphérique du guide de lumière (100), de préférence seulement sur une partie de la périphérie, et plusieurs éléments de diffusion de lumière (130) sensiblement similaires sont disposés parallèlement entre eux, mais le long du guide de lumière (100).

8. Guide de lumière (100) selon l'une des revendications 1 à 7, **caractérisé par le fait que** le guide de lumière (100) s'étend en étant incurvé dans la zone de diffuseur (140).

9. Dispositif de guidage de lumière (1, 2) pour un phare de véhicule, **caractérisé par** au moins deux guides de lumière (200, 300, 400, 500) selon l'une des revendications 1 à 8, qui sont disposés en étant adjacents l'un à l'autre de telle sorte que les surfaces de couplage de lumière (210, 310, 410, 510) de tous les guides de lumière (200, 300, 400, 500) forment une surface commune.

10. Dispositif de guidage de lumière (1, 2) selon la revendication 9, **caractérisé par le fait qu'**au moins deux guides de lumière (200, 300, 400, 500) sont disposés en étant adjacents l'un à l'autre, de telle sorte que les surfaces de couplage de lumière (210, 310, 410, 510) de tous les guides de lumière (200, 300, 400, 500) forment une surface commune et les guides de lumière (200, 300, 400, 500) se chevauchent quant à leurs sections transversales fictives dans les zones de diffuseur (240, 340).
